# EUROPÄISCHE PATENTSCHRIFT

(11) **EP 0 927 123 B1**
(45) Veröffentlichungstag und Bekanntmachung des Hinweises auf die Patenterteilung: **28.03.2001**
(21) Anmeldenummer: 97942873.7
(22) Anmeldetag: 22.08.1997
(51) Int. Cl.: B60T 13/16, B60T 8/44

(54) **HYDRAULISCHE BREMSANLAGE MIT BREMSKRAFTVERSTÄRKUNG**
HYDRAULIC BRAKE SYSTEM WITH HYDRAULIC SERVO BRAKE
SYSTEME DE FREINAGE HYDRAULIQUE A SERVOFREIN

(30) Priorität: 23.09.1996 DE 19638920
(43) Veröffentlichungstag der Anmeldung: 07.07.1999
(73) Patentinhaber: Continental Teves AG & Co. oHG, 60488 Frankfurt (DE)
(72) Erfinder: STEFFES, Helmut, D-65795 Hattersheim (DE)
(74) Vertreter: Blum, Klaus-Dieter
(86) Internationale Anmeldenummer: EP9704596
(87) Internationale Veröffentlichungsnummer: WO9813243

(56) Entgegenhaltungen:
- DE-A- 3 323 402
- DE-A- 3 903 532
- DE-A- 4 000 837
- DE-A- 4 027 565
- DE-A- 4 037 468
- DE-A- 4 104 069
- DE-A- 4 122 643

## Beschreibung

Die Erfindung betrifft eine hydraulische Bremsanlage mit einem durch ein Bremspedal betätigbaren Hauptzylinder nach dem Oberbegriff des Patentanspruchs 1.

Hydraulische Bremsanlagen der angegebenen Art sind aus dem Ate Bremsen-Handbuch, 2. Auflage, 1960, Seiten 60 bis 65 bekannt. Bei diesen Bremsanlagen liefert eine von einem Motor angetriebene Hochdruckpumpe einen gleichbleibenden Flüssigkeitsstrom, der in einem Kreislauf durch einen Drosselspalt zwischen einem am Hauptzylinder angeordneten Verstärkerschieber und dem Hauptzylinderkolben zu einem Behälter zurückfließt, aus dem die Pumpe das Druckmittel ansaugt. Durch Betätigen des Bremspedals wird der Verstärkerschieber gegen den Hauptzylinderkolben verschoben und damit der Durchfluß im Drosselspalt gedrosselt, wodurch in dem Ringraum zwischen dem Verstärkerschieber und dem Hauptzylinderkolben ein Druck aufgebaut wird, der den Hauptzylinderkolben in Bremsrichtung verschiebt und als Pedalrückstellkraft am Verstärkerschieber wirksam wird. Wegen der im Vergleich zu Vakuumbremskraftverstärkern höheren Herstell-und Betriebskosten haben sich diese bekannten Bremsanlagen mit hydraulischer Bremskraftverstärkung in der Praxis keine nennenswerte Bedeutung erlangt.

Eine andere bekannte Vorrichtung zur hydraulischen Bremskraftverstärkung nutzt die im Fahrzeug bereits vorhandene Energieversorgung aus, indem die Hydraulikpumpe für die Lenkkraftunterstützung über einen druckgesteuerten Stromregler einen Hydrospeicher lädt. Das unter Druck gespeicherte Druckmittel wird mittels eines durch das Bremspedal bestätigbaren Steuerventils auf einen Verstärkerkolben geleitet, der den Kolben eines Hauptbremszylinders betätigt. Hierbei ist für eine Bremsschlupfregelung ein zusätzlicher Pumpenkreis erforderlich.

Bei einer weiteren aus der DE 40 35 906 A1 bekannten hydraulischen Bremsanlage wird das von einer Pumpe geförderte Druckmittel über ein Druckminderventil einem durch das Bremspedal betätigbaren Drucksteuerventil zugeführt, das in Abhängigkeit von der am Bremspedal ausgeübten Kraft den Druck in der Bremsleitung steuert. Das Druckminderventil ist durch eine Steuerleitung mit der Bremsleitung verbunden und so ausgelegt, daß der Druck auf der Eingangsseite des Drucksteuerventils jeweils 30 bar über dem Druck in der Bremsleitung liegt. Diese bekannte Bremsdrucksteuervorrichtung ist nicht für einen Anschluß mehrerer voneinander unabhängiger Bremskreise geeignet.

Aus der DE 44 46 525 A1 ist eine hydraulische Kraftfahrzeugbremsanlage zur Fahrstabilitätsregelung und Antriebsschlupfregelung mit einem nach dem Rückförderprinzip arbeitenden Bremsschlupfregelsystem bekannt, bei der zur Betätigung eines Zweikreis-Hauptzylinders ein mit Hilfe eines Bremspedals steuerbarer Unterdruckbremskraftverstärker vorgesehen ist. Die Bremsanlage weist eine Pumpe auf, deren Druckseite an die Bremsleitung angeschlossen ist und die bei einer Bremsschlupfregelung als Rückförderpumpe und bei einer Fahrstabilitäts- oder Antriebsschlupfregelung als Bremsdruckgeber arbeitet. Bei Bremsvorgängen ohne Einsatz der Regeleinrichtungen ist die Pumpe nicht in Betrieb. Zum Betrieb als Bremsdruckgeber ist die Saugseite der Pumpe durch ein Ventil mit der Bremsleitung verbindbar, wobei zur Verbesserung des Ansaugverhaltens in der Bremsleitung mittels einer Vorladepumpe ein Vorladedruck erzeugt wird.

Aus der gattungsbildenden DE-A-3903532 geht eine hydraulische Bremsanlage hervor, in der parallel zu einer in der Bremsleitung eingesetzten Pumpe ein Drucksteuerventil angeordnet ist, das eine hydraulischer Verstärkung des Hauptzylinderdrucks im Betrieb der Pumpe bewirkt und das Druckverhältnis zwischen dem Pumpendruck und' dem Hauptzylinderdruck konstant hält. Da in der Bremsleitung ausschließlich die Pumpe eingesetzt ist, die eine Radbremse unmmittelbar mit Druckmittel des Hauptzylinders versorgt, läßt sich in einer Antiblockierregelung die Förderrichtung der Pumpe zur Bremsdruchabsenkung umkehren. Die Pumpe verhindert ein schnelles Füllen und Anlegen der Bremsen. Darüber hinaus wirken Druckpulsationen der Pumpe auf das angeschlossene Leitungssystem und den Hauptbremszylinder zurück.

Der Erfindung liegt die Aufgabe zugrunde, eine Bremsanlage der gattungsbildenden Art derart zu verbessern, daß deren Nachteile beseitigt werden.

Erfindungsgemäß wird diese Aufgabe für die gattungsbildende Bremsanlage mit den kennzeichnenden Merkmalen des Anspruchs 1 gelöst.

Bei der erfindungsgemäßen Bremsanlage erfolgt die Verstärkung der an dem Bremspedal ausgeübten Betätigungskraft nicht am Hauptzylinder oder Bremsdruckgeber, sondern in der Bremsleitung, wobei diese durch den integrierten hydrodynamischen Pumpenkreis in einen hauptzylinderseitigen Abschnitt niederen Drucks und einen bremszylinderseitigen Abschnitt höheren Drucks unterteilt wird. Die Steuerung des Pumpenkreises wird dabei ebenfalls nicht mechanisch durch das Bremspedal bewirkt, sondern durch den Ausgangsdruck des Hauptzylinders, der den Steuerkolben des Drucksteuerventils beaufschlagt. Der hydrodynamische Pumpenkreis ist bis auf die Anschlußstellen für die Bremsleitung geschlossen und somit auch Teil des hydrostatischen Bremskreises. Die Förderhöhe der Pumpe entspricht damit bei der Bremskraftverstärkung jeweils nur der Druckdifferenz zwischen Hauptzylinderdruck und Bremszylinderdruck. Das parallel zum Pumpenkreis geschaltete Rückschlagventil sorgt für eine direkte Verbindung des Hauptzylinders mit dem Radzylinder, um eine schnelle und von dem Pumpenkreis unabhängigen Bremsbetätigung zu erzielen. Der Druckabbau am Bremszylinder bei Senkung des Hauptzylinderdrucks erfolgt über das Drucksteuerventil.

Die erfindungsgemäße Bremsanlage ermöglicht eine hydraulische Bremskraftverstärkung mit geringem baulichen Aufwand und unabhängig von anderen Servosystemen im Fahrzeug. Sie eignet sich vor allem für Kraftfahrzeuge, bei denen kein ausreichender Unterdruck zum Betrieb eines pneumatischen Unterdruck-Bremskraftverstärkers zur Verfügung steht. Da bei der erfindungsgemäßen Bremsanlage die Steuerung der Bremskraftverstärkung ausschließlich hydraulisch erfolgt, ist sie für jede Hauptzylinderbauart geeignet. Auch der nachträgliche Einbau eines erfindungsgemäßen hydrodynamischen Verstärkerkreises in eine bereits bestehende Bremsanlage ist möglich. Die erfindungsgemäße Bremsanlage hat weiterhin den Vorteil, daß mit geringem zusätzlichem Aufwand eine Bremsschlupfregelung erreichbar ist, wobei die vorhandene Pumpe als Rückförderpumpe dient. Ebenso kann die erfindungsgemäße Bremsanlage mit geringem Aufwand zu einer Bremsanlage mit Fahrstabilitätsregelung erweitert werden.

Zum Antrieb der Pumpe kann ein Elektromotor verwendet werden, der bei Einleitung eines Bremsvorgangs eingeschaltet wird. Dies ist ohne Nachteil für das Ansprechverhalten der Bremsanlage möglich, da während des Anlaufens der Pumpe bereits der Druckaufbau mit Hilfe des Hauptzylinders erfolgt.

Das Drucksteuerventil kann als Druckbegrenzungsventil ausgebildet sein, wobei zwischen einem Rückschlagventil und einer an einem hauptzylinderseitigen Abschnitt angeschlossenen Leitung eine mit dem Drucksteuerventil verbundene Steuerleitung angeschlossen ist. Weitherhin kann vorgesehen sein, daß der Steuerkolben des Drucksteuerventils als Stufenkolben ausgebildet ist, dessen Stufenfläche mit Atmosphärendruck beaufschlagt ist. Eine erfindungsgemäße Weiterbildung der Bremsanlage, die eine Regelung des Bremsschlupfes ermöglicht, kann dadurch erreicht werden, daß die Saugseite der Pumpe durch ein Trennventil von dem Hauptzylinder, dem in die Bremsleitung geschalteten Rückschlagventil und dem Drucksteuerventil trennbar ist, daß die Druckmittelzufuhr zum Bremszylinder durch ein erstes Steuerventil in der Bremsleitung sperrbar und der Bremszylinder durch ein zweites Steuerventil mit einer zu einem Niederdruckspeicher und zur Saugseite der Pumpe führenden Rücklaufleitung verbindbar ist und daß das Trennventil und die Steuerventile durch eine Bremsschlupfregeleinrichtung steuerbar sind.

Wird eine derartige Bremsanlage durch wenige Bauelemente erweitert, so kann auch eine automatische Bremsbetätigung zur Regelung der Fahrstabilität ermöglicht werden. Die Erweiterung kann darin bestehen, daß der Hauptzylinder mit einer Vorrichtung zur Vorladung der Bremsanlage ausgerüstet wird und daß in Reihe mit dem Drucksteuerventil ein Sperrventil mit parallelem Druckbegrenzungsventil vorgesehen wird, wobei die Vorrichtung zur Vorladung, das Sperrventil, das Trennventil und die Steuerventile durch eine Regeleinrichtung zur Fahrstabilitäts-und/oder Antriebsschlupfregelung steuerbar sind. Als Vorrichtung zur Vorladung eignet sich besonders ein elektromechanischer Vorladeantrieb, der am Hauptzylinder angeordnet ist und einen Elektromotor und ein Getriebe aufweist, das die Drehbewegung des Elektromotors in eine geradlinige Bewegung umformt, durch die der Kolben des Hauptzylinders betätigt wird. Soll der Hauptzylinder nicht zur Vorladung herangezogen werden, so kann eine durch einen Elektromotor antreibbare Ladepumpe vorgesehen sein, die an den Behälteranschluß des Hauptzylinders angeschlossen ist, wobei die Verbindung vom Behälteranschluß zum Behälter durch ein Ventil sperrbar ist. Ist der Hauptzylinder ein Tandemhauptzylinder, so genügt es, die Ladepumpe an den Behälteranschluß des Druckstangenkreises anzuschließen. Die Vorladung des Schwimmkreises erfolgt dann durch hydraulische Verschiebung des Schwimmkolbens des Tandemhauptzylinders.

Da die Ladepumpe nur ein begrenztes Druckmittelvolumen in die Bremsanlage fördern muß, kann sie aus einem Ladezylinder nach Art eines Hauptzylinders bestehen, dessen Kolben durch einen elektromechanischen Antrieb verschiebbar ist. Zur Begrenzung des Drucks der Vorladung kann der elektromechanische Antrieb mit einer Rutschkupplung versehen sein.

Die Erfindung wird nachfolgend anhand von Ausführungsbeispielen näher erläutert, die in der Zeichnung dargestellt ist. Es zeigen
- Figur 1: den Schaltplan eines Bremskreises einer hydraulischen Zweikreis-Bremsanlage mit hydraulischer Bremskraftverstärkung gemäß der Erfindung
- Figur 2: den Schaltplan eines Bremskreises einer durch die Bauelemente einer Bremsschlupfregeleinrichtung erweiterten Bremsanlage gemäß Figur 1,
- Figur 3: den Schaltplan eines Bremskreises einer durch die Bauelemente einer Fahrstabilitäts- und Antriebsschlupfregeleinrichtung erweiterten Bremsanlage gemäß Figur 2,
- Figur 4: einen Längsschnitt durch ein Ausführungsbeispiel eines Drucksteuerventils,
- Figur 5: eine schematische Darstellung eines elektromechanisch betätigbaren Ladezylinders und
- Figur 6: einen Längsschnitt eines Hauptzylinders mit elektromechanischem Vorladeantrieb.

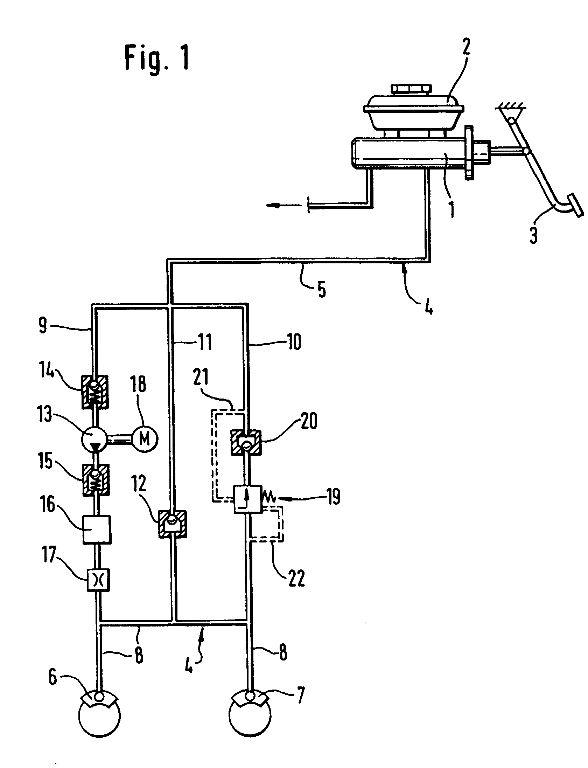

Figur 1 zeigt den einen von zwei identischen Bremskreisen, die an die beiden Arbeitskammern eines Tandemhauptzylinders 1 mit einem Behälter 2 zur Aufnahme eines Druckmittelvorrats angeschlossen sind. Zur Betätigung des Tandemhauptzylinders 1 ist ein Bremspedal 3 vorgesehen. Der Bremskreis weist eine Bremsleitung 4 auf, die aus einem hauptzylinderseitigen Abschnitt 5 und mit zwei Bremszylindern 6, 7 verbundenen Abschnitten 8 besteht. Die Abschnitte 5, 8 sind durch die Leitungen 9, 10 eines Pumpenkreises und eine Leitung 11 verbunden, in der ein in Richtung auf den Tandemhauptzylinder 1 schließendes Rückschlagventil 12 angeordnet ist. In die Leitung 9 ist eine Pumpe 13 mit Saugventil 14 und Druckventil 15 geschaltet, die über eine Dämpfungskammer 16 und eine Drossel 17 in Richtung der Abschnitte 8 der Bremsleitung 4 fördert. Die Pumpe 13 wird von einem Elektromotor 18 angetrieben. In der Leitung 10 befindet sich ein als Druckbegrenzungsventil ausgebildetes Drucksteuerventil 19, das in Richtung des Tandemhauptzylinders 1 öffnet. Stromab des Drucksteuerventils 19 ist ein Rückschlagventil 20 angeordnet. Parallel zum Rückschlagventil 20 ist das Drucksteuerventil 19 durch eine Steuerleitung 21 mit der Leitung 10 verbunden. Eine weitere Steuerleitung 22 verbindet das Drucksteuerventil 19 mit dem bremszylinderseitigen Abschnitt der Leitung 10.

Wird der Tandemhauptzylinder 1 durch das Bremspedal 3 betätigt, so wird die von diesem verdrängte Bremsflüssigkeit über die Leitung 11 und das Rückschlagventil 12 den Bremszylindern 6, 7 zur schnellen Füllung und Anlegung der Bremsen zugeführt. Gleichzeitig wird beispielsweise mit Hilfe eines durch das Bremspedal betätigbaren Schalters der Elektromotor 18 eingeschaltet, so daß die Pumpe 13 anläuft. Da das Drucksteuerventil 19 durch den mit dem Tandemhauptzylinder 1 inzwischen aufgebauten Druck geschlossen gehalten wird, bewirkt der Förderstrom der anlaufenden Pumpe 13 in den Abschnitten 8 der Bremsleitung und den Bremszylindern 6, 7 einen Druckanstieg über den Hauptzylinderdruck hinaus. Der Druckanstieg wird durch das Drucksteuerventil 19 begrenzt, welches erst öffnet, wenn das durch die Auslegung der hydraulischen Wirkflächen des Drucksteuerventils 19 bestimmte proportionale Verhältnis von Bremszylinderdruck zu Hauptzylinderdruck erreicht ist. Dieses Druckverhältnis wird während der Dauer des Bremsbetätigungsvorgangs durch das Drucksteuerventil aufrechterhalten, wobei das Drucksteuerventil den Förderstrom der Pumpe 13 nach Maßgabe des Hauptzylinderdrucks mehr oder weniger stark drosselt, um die Höhe des Bremszylinderdrucks entsprechend einzustellen. Wird zur Beendigung des Bremsvorgangs der Hauptzylinderdruck durch Entlasten des Bremspedals 3 wieder gesenkt, so gelangt die Bremsflüssigkeit aus den Bremszylindern 6, 7 über das geöffnete Drucksteuerventil 19 in den Tandemhauptzylinder 1 zurück. Die Pumpe 13 wird abgeschaltet, sobald das Bremspedal 3 in seine Ruhestellung gelangt oder der Druck im Hauptbremszylinder 1 vollständig abgebaut ist.

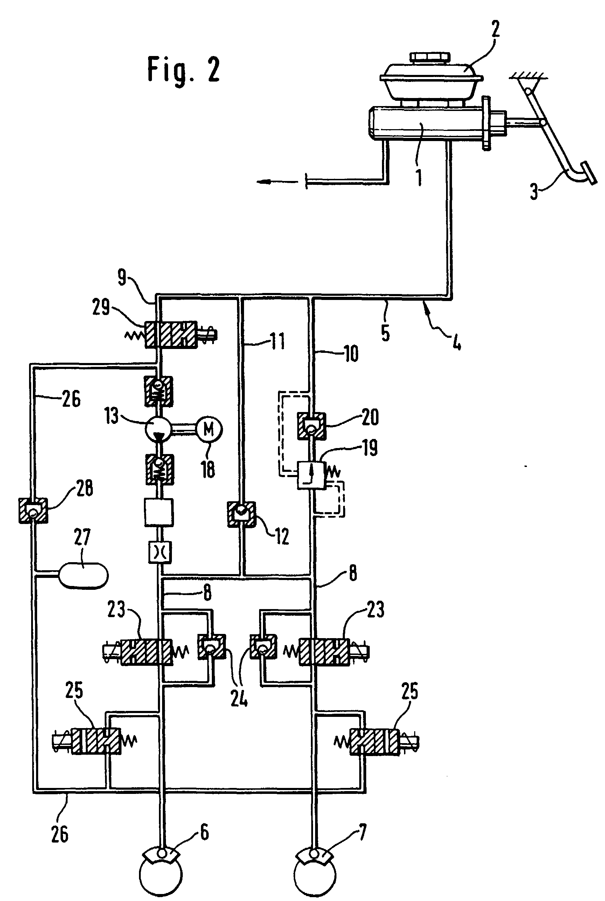

Bei der Weiterbildung des beschriebenen Bremskreises gemäß Figur 2 enthält jeder einem Bremszylinder 6 bzw. 7 zugeordnete Abschnitt 8 der Bremsleitung 4 ein elektromagnetisch betätigbares Einlaßventil 23, das in der Ruhestellung offen ist und durch Erregung des Betätigungsmagneten in die Schließstellung geschaltet werden kann. Parallel zu den Einlaßventilen 23 sind in Richtung auf den Pumpenkreis öffnende Rückschlagventile 24 vorgesehen. Die Bremszylinder 6, 7 sind außerdem jeweils über ein elektromagnetisch betätigbares Auslaßventil 25, das in der Ruhestellung geschlossen ist und durch Erregung des Betätigungsmagneten in Offenstellung geschaltet werden kann, mit einer Rücklaufleitung 26 verbunden, die zu einem Niederdruckspeicher 27 und über ein Rückschlagventil 28 zum Saugventil 14 der Pumpe 13 führt. Weiterhin ist in der Leitung 9 zwischen den Anschlüssen der Rücklaufleitung 26 und der Leitung 11 ein elektromagnetisch betätigbares, in seiner Grundstellung offenes Trennventil 29 vorgesehen, durch das die Leitung 9 und damit die Verbindung von der Saugseite der Pumpe 13 zum Tandemhauptzylinder 1 und zum Drucksteuerventil 19 sperrbar ist.

Die Magnete der Einlaßventile 23, der Auslaßventile 25 und des Trennventils 29 werden von einem elektronischen Bremsschlupfregler gesteuert, der im Regelfall Ventilsteuersignale aussendet, um den Bremsdruck in den Bremszylindern 6, 7 zu modulieren. Soll beispielsweise der Bremsdruck im Bremszylinder 6 reduziert werden, so wird das dem Bremszylinder 6 zugeordnete Einlaßventil 23 geschlossen und das Auslaßventil 25 geöffnet. Über das Auslaßventil 25 kann Druckmittel aus dem Bremszylinder in die Rücklaufleitung 26 entweichen, und von dem Niederdruckspeicher 27 aufgenommen werden. Gleichzeitig wird das Trennventil 29 geschlossen, wodurch der Druck auf der Saugseite der Pumpe 13 absinkt und die Pumpe 13 gezwungen wird, das von dem Niederdruckspeicher 27 aufgenommene Druckmittelvolumen in die Abschnitte 8 der Bremsleitung 4 bzw., wenn es dort nicht aufgenommen werden kann, über das Drucksteuerventil 19 zum Tandemhauptzylinder 1 zurückzufördern. Zum erneuten Druckaufbau werden das Einlaßventil 23 und das Auslaßventil 25 des Bremszylinders 6 in ihre Ruhestellung zurückgeschaltet. Reicht hierbei das in dem Niederdruckspeicher 27 vorhandene Druckmittelvolumen für den erforderlichen Druckaufbau nicht aus, so wird das Trennventil 29 wieder geöffnet, damit die Pumpe 13 dem Tandemhauptzylinder 1 das benötigte Druckmittelvolumen wieder entnehmen kann. Bei Beendigung des Regelvorgangs wird das Trennventil 29 so lange gesperrt, bis die Pumpe den Niederdruckspeicher 27 entleert und das Druckmittelvolumen dem Tandemhauptzylinder 1 wieder zugeführt hat.

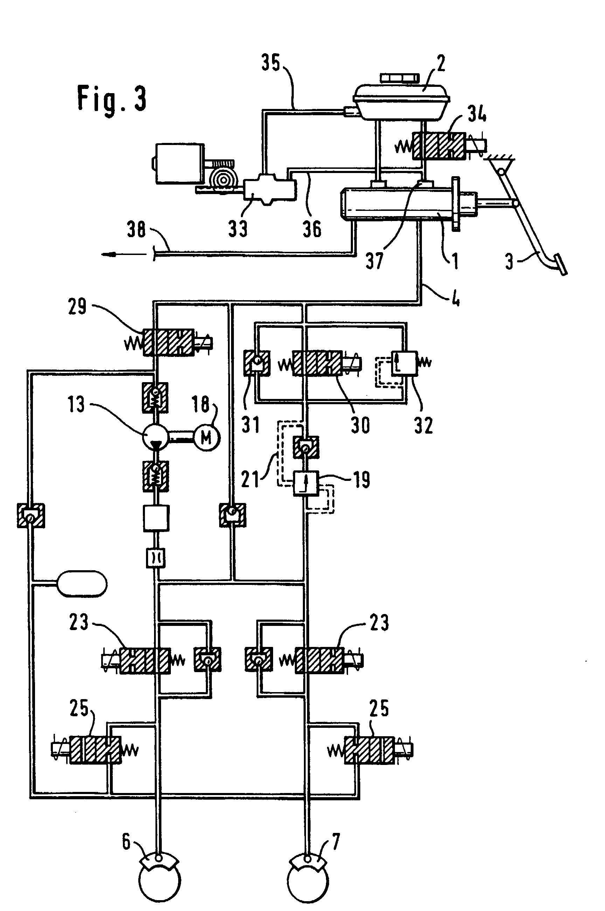

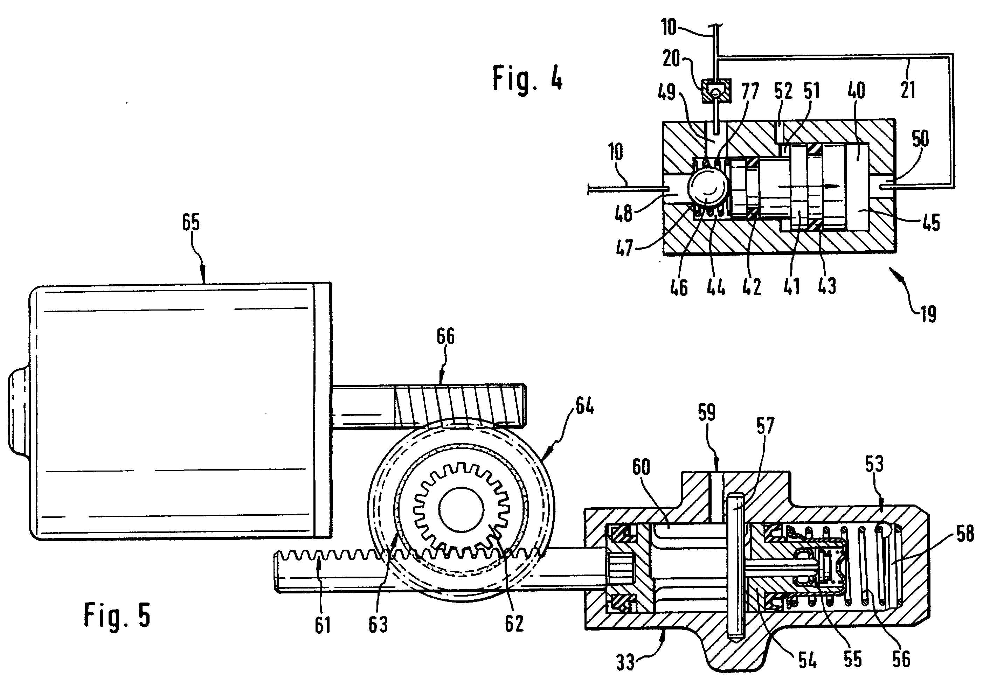

Die in Figur 3 dargestellte Erweiterung der Bremsanlage gemäß Figur 2 ermöglicht eine automatische von einem elektronischen Regler gesteuerte Bremsbetätigung zur Regelung der Fahrstabilität oder des Antriebsschlupfes. Hierzu weist die Bremsanlage zusätzlich in der Leitung 10 stromab des Anschlusses der Steuerleitung 21 ein elektromagnetisch betätigbares Sperrventil 30 auf, dem ein in Richtung der Steuerleitung 21 öffnendes Rückschlagventil 31 und ein in Richtung der Bremsleitung 4 öffnendes Druckbegrenzungsventil 32 parallel geschaltet sind. Der Tandemhauptzylinder 1 ist weiterhin mit einer Vorrichtung zur Vorladung der Bremskreise versehen, die aus einem elektromechanisch angetriebenen Ladezylinder 33 und einem Magnetventil 34 besteht. Der Ladezylinder 33 wird anhand der Darstellung in Figur 5 weiter unten näher beschrieben. Er ist über eine Niederdruckleitung 35 an den Behälter 2 und über eine Druckleitung 36 an den Behälteranschluß 37 der druckstangenseitigen Arbeitskammer des Tandemhauptzylinders 1 angeschlossen. Durch das Magnetventil 34 kann die Verbindung zwischen dem Behälter 2 und dem Behälteranschluß 37 gesperrt werden.

Soll eine automatische Bremsbetätigung eingeleitet werden, so schaltet der Regler den Antrieb des Ladezylinders 33 und den Elektromotor 18 der Pumpe 13 ein und schließt gleichzeitig das Sperrventil 30 und das Magnetventil 34. Durch den Ladezylinder 33 wird der Bremskreis gefüllt und ein Vorladedruck von bis zu 6 bar aufgebaut, der ein schnelles Ansprechen der Bremsdruckerzeugung mit Hilfe der Pumpe 13 gewährleistet. Durch den im Druckstangenkreis des Tandemhauptzylinders 1 aufgebauten Vorladedruck wird auch der Schwimmkolben des Tandemhauptzylinders 1 verschoben und ein entsprechender Vorladedruck in dem zweiten an die Bremsleitung 38 angeschlossenen, nicht dargestellten Bremskreis bewirkt, der in seinem Aufbau mit dem dargestellten Bremskreis übereinstimmt. Durch das Schließen des Sperrventils 30 steht das gesamte von der Pumpe 13 geförderte Druckmittelvolumen zum Druckaufbau in den Abschnitten 8 der Bremsleitung 4 zur Verfügung und kann wie bei einer Bremsschlupfregelung durch entsprechende Steuerung der Einlaßventile 23 und der Auslaßventile 25 sowie des Trennventils 29 zur geregelten Druckmodulation den Bremszylindern 6, 7 zugeführt werden. Das überschüssige Druckmittelvolumen wird über das Drucksteuerventil 19 und das Druckbegrenzungsventil 32 zum.Tandemhauptzylinder 1 bzw. Ladezylinder 33 zurückgefördert. Hierbei ist der Öffnungsdruck des Druckbegrenzungsventils 32 und der Schaltdruck des Drucksteuerventils 19 so aufeinander abzustimmen, daß in den Abschnitten 8 der Bremsleitung 4 ein geeigneter Maximaldruck erreicht wird.

Figur 4 zeigt ein Ausführungsbeispiel des Drucksteuerventils 19. In einem Zylindergehäuse 39 mit gestufter Zylinderbohrung 40 ist ein Stufenkolben 41 verschiebbar gelagert und mittels Dichtringen 42, 43 abgedichtet. Der Stufenkolben 41 begrenzt mit seiner kleineren Stirnfläche eine Ventilkammer 44 und mit seiner größeren Stirnfläche eine Steuerkammer 45. In der Ventilkammer 44 befindet sich eine Ventilkugel 46 und eine Druckfeder zum Offenhalten im drucklosen Zustand, durch die ein Ventilsitz 47 verschließbar ist. Der Ventilsitz ist durch eine Bohrung 48 mit der zur Druckseite der Pumpe 13 führenden Leitung 4 verbunden. Eine Bohrung 49 verbindet die Ventilkammer 44 mit dem an die Saugseite der Pumpe 13 angeschlossenen Abschnitt der Leitung 10. Die Steuerkammer 45 ist über eine Bohrung 50 an die Steuerleitung 21 angeschlossen. Der von der Kolbenstufe begrenzte Ringraum 51 steht über eine Bohrung 52 mit der Atmosphäre in Verbindung.

Die Zeichnung zeigt das Drucksteuerventil in der Schließstellung, in die es durch Druckbeaufschlagung an der Steuerleitung 21 gelangt. Die Höhe der Schließkraft wird hierbei durch die Größe der Ringfläche an der Stufe des Stufenkolbens 41 bestimmt. Zum Öffnen des Drucksteuerventils muß der Druck in der Bohrung 48 den Druck in der Ventilkammer 44 und der Steuerkammer 45 um einen Betrag überschreiten, der dem Druck in diesen Kammern multipliziert mit dem Quozienten aus der- Ringfläche der Kolbenstufe und der Querschnittsfläche des Ventilsitzes 47 entspricht. Der Schließdruck wächst somit proportional mit dem von dem Hauptzylinder in der Ventilkammer 44 und der Steuerkammer 45 aufgebauten Druck, wobei das Verhältnis von Schließdruck zu Hauptzylinderdruck durch das Verhältnis der genannten Flächen bestimmt wird. Wird der Hauptzylinderdruck beim Lösen der Bremse auf Null gesenkt, so wird das Ventil durch die zum Hauptzylinder zurückströmende Flüssigkeit als auch mit Hilfe einer Druckfeder 77 in eine Offenstellung gebracht, in der es bis zum erneuten Druckaufbau verbleibt.

Figur 5 zeigt ein Ausführungsbeispiel des elektromechanisch betätigbaren Ladezylinders 33. Der Ladezylinder 33 entspricht in seinem Aufbau einem Hauptzylinder mit einem Zylindergehäuse 53, einem Kolben 54 und einem im Kolben 54 angeordneten Zentralventil 55. Der Kolben 54 wird von einer Druckfeder 56 in die in der Zeichnung dargestellte Ruhestellung bewegt, in der das Zentralventil 55 von einem Stift 57 offengehalten wird. In dieser Stellung verbindet das Zentralventil 55 einen von der Stirnfläche des Kolbens 54 begrenzten Druckraum 58 mit einem über eine Bohrung 59 an einen Behälter anschließbaren Behälterraum 60. An dem Kolben 54 ist eine Zahnstange 61 befestigt, die mit einem Zahnrad 62 eines Getriebes in Eingriff ist. Das Zahnrad 62 ist durch eine Rutschkupplung 63 mit einem Schneckenrad 64 verbunden, das mit einer von einem Elektromotor 65 angetriebenen Schnecke 66 kämmt. Anstelle eines Schneckengetriebes kann auch jede andere Art von Untersetzungsgetriebe verwendet werden. Die in dem Schneckenrad 64 angeordnete Rutschkupplung 63 ist so ausgelegt, daß sie bei einem Vorladedruck von 6 bar im Druckraum 58 und dementsprechend auch wenn der Kolben 54 seine Endstellung erreicht, durchrutscht.

Wird zur Aktivierung der Vorladung der Elektromotor 65 eingeschaltet, treibt dieser über das Schneckengetriebe 66, 64, die Rutschkupplung 63 und das Zahnstangengetriebe 61, 62 den Kolben 54 an, wodurch Druckmittel zum Behälteranschluß 37 des Tandemhauptzylinders 1 und durch diesen in den Bremskreis gefördert wird. Erreicht der Vorladedruck 6 bar, so verhindert die Rutschkupplung einen weiteren Druckanstieg. Die Einschaltdauer des Elektromotors 65 kann daher an dem größtmöglichen Vorladehub orientiert werden. Eine druckabhängige Steuerung ist nicht erforderlich. Wird von der Pumpe 13 Überschußvolumen zum Ladezylinder 33 zurückgefördert, so kann der Kolben 54 hierdurch zurückgedrückt werden, ohne daß der Elektromotor 65 eingeschaltet wird, weil auch in diesem Fall die Rutschkupplung 63 durchrutschen kann. Dies macht die elektronische Steuerung besonders einfach.

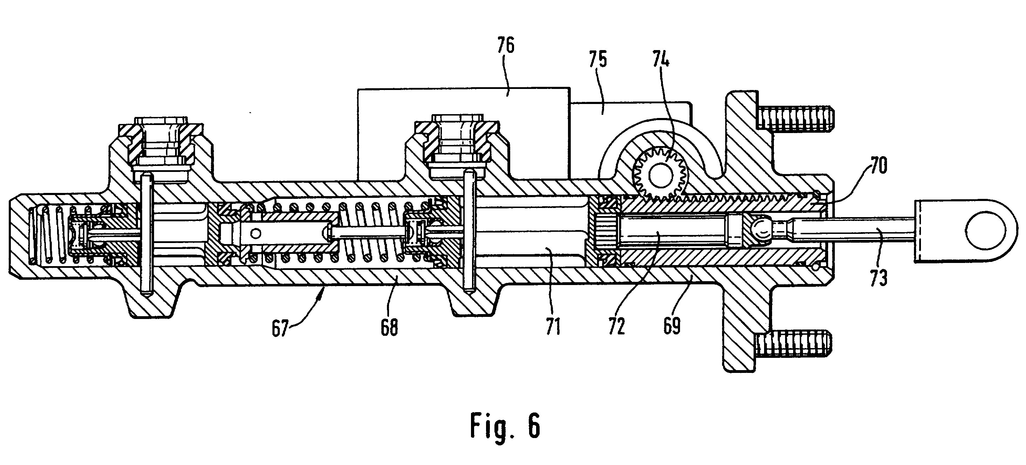

Anstelle eines Ladezylinders kann, wie das Ausführungsbeispiel gemäß Figur 6 zeigt, die bei automatischer Bremsbetätigung erforderliche Vorladung auch mit Hilfe eines elektromechanisch betätigbaren Tandemhauptzylinders 67 erfolgen. Hierzu ist das offene Ende des Hauptzylindergehäuses 68 mit einer Verlängerung 69 versehen, in der eine Zahnstangenhülse 70 angeordnet ist, an der sich der Druckstangenkolben 71 abstützt. In der Bohrung der Zahnstangenhülse 70 befindet sich ein an dem Druckstangenkolben 71 befestigter Stößel 72, an dem die Druckstange 73 mittels eines Kugelgelenks befestigt ist. In einer tangentialen Bohrung der Verlängerung 69 ist ein Zahnrad 74 angeordnet, durch das die Zahnstangenhülse 70 bewegbar ist. Der Antrieb des Zahnrads 74 erfolgt in analoger Weise wie bei dem Ausführungsbeispiel gemäß Figur 5 über ein Getriebe 75 durch einen Elektromotor 76.

Bei normaler Betätigung des Tandemhauptzylinders 67 durch das Bremspedal gleitet der Stößel 72 in der Zahnstangenhülse 70, wobei es keine Beeinflussung des Pedalgefühls gibt. Wird der Vorladeantrieb eingeschaltet, so wird der Druckstangenkolben 71 durch die Zahnstangenhülse 70 in Bremsanlegerichtung verschoben. Auch hierbei ist in dem Getriebe 75 eine Rutschkupplung wirksam, die die Betätigungskräfte in beiden Richtungen begrenzt.

### Bezugszeichenliste:

- 1: Tandemhauptzylinder
- 2: Behälter
- 3: Bremspedal
- 4: Bremsleitung
- 5: Abschnitt
- 6: Bremszylinder
- 7: Bremszylinder
- 8: Abschnitt
- 9: Leitung
- 10: Leitung
- 11: Leitung
- 12: Rückschlagventil
- 13: Pumpe
- 14: Saugventil
- 15: Druckventil
- 16: Dämpfungskammer
- 17: Drossel
- 18: Elektromotor
- 19: Drucksteuerventil
- 20: Rückschlagventil
- 21: Steuerleitung
- 22: Steuerleitung
- 23: Einlaßventil
- 24: Rückschlagventil
- 25: Auslaßventil
- 26: Rücklaufleitung
- 27: Niederdruckspeicher
- 28: Rückschlagventil
- 29: Trennventil
- 30: Sperrventil
- 31: Rückschlagventil
- 32: Druckbegrenzungsventil
- 33: Ladezylinder
- 34: Magnetventil
- 35: Niederdruckleitung
- 36: Druckleitung
- 37: Behälteranschluß
- 38: Bremsleitung
- 39: Zylindergehäuse
- 40: Zylinderbohrung
- 41: Stufenkolben
- 42: Dichtringe
- 43: Dichtringe
- 44: Ventilkammer
- 45: Steuerkammer
- 46: Ventilkugel
- 47: Ventilsitz
- 48: Bohrung
- 49: Bohrung
- 50: Bohrung
- 51: Ringraum
- 52: Bohrung
- 53: Zylindergehäuse
- 54: Kolben
- 55: Zentralventil
- 56: Druckfeder
- 57: Stift
- 58: Druckraum
- 59: Bohrung
- 60: Behälterraum
- 61: Zahnstange
- 62: Zahnrad
- 63: Rutschkupplung
- 64: Schneckenrad
- 65: Elektromotor
- 66: Schnecke
- 67: Tandemhauptzylinder
- 68: Hauptzylindergehäuse
- 69: Verlängerung
- 70: Zahnstangenhülse
- 71: Druckstangenkolben
- 72: Stößel
- 73: Druckstange
- 74: Zahnrad
- 75: Getriebe
- 76: Elektromotor

## Patentansprüche

1. Hydraulische Bremsanlage mit einem durch ein Bremspedal (3) betätigbaren Hauptzylinder (1), einer den Hauptzylinder (1) mit einem Bremszylinder (6, 7) verbindenden Bremsleitung (4) und einer hydraulischen Vorrichtung zur Bremskraftverstärkung mit einer von einem Motor (18) antreibbaren Pumpe (13), deren Förderstrom in einem Kreislauf über ein Drucksteuerventil (19) zur Saugseite der Pumpe (13) geführt wird, wobei die Pumpe (13) und das Drucksteuerventil (19) parallel zueinander in die Bremsleitung (4) geschaltet sind, wobei die Saugseite der Pumpe (13) und der Ausgang des Drucksteuerventils (19) mit dem Hauptzylinder (1) und die Druckseite der Pumpe (13) und der Eingang des Drucksteuerventils (19) mit dem Bremszylinder (6, 7) verbunden sind und wobei das Drucksteuerventil (19) den Pumpendruck in Abhängigkeit vom Druck in dem mit dem Hauptzylinder (1) verbundenen Abschnitt (5) der Bremsleitung (4) steuert und die hydraulischen Wirkflächen des Drucksteuerventils (19) so ausgelegt sind, daß das Verhältnis von Pumpendruck zu Hauptzylinderdruck größer als 1 ist, **dadurch gekennzeichnet,**
- daß parallel zur Pumpe (13) und zum Drucksteuerventil (19) in die Bremsleitung (4) ein in Richtung des Hauptzylinders (1) schließendes Rückschlagventil (12) geschaltet ist,
- daß das Drucksteuerventil (19) ausgangsseitig in Richtung einer am hauptzylinderseitigen Abschnitt (5) angeschlossenen Leitung (10) ein in Richtung auf das Drucksteuerventil (19) schließendes Rückschlagventil (20) aufweist, und
- daß die Pumpe (13) über eine Drossel (17) am Bremszylinder (6, 7) angeschlossen ist.

2. Bremsanlage nach Anspruch 1, dadurch **gekennzeichnet**, daß die Pumpe (13) von einem Elektromotor (18) angetrieben wird, der bei Einleitung eines Bremsvorgangs eingeschaltet wird.

3. Bremsanlage nach Anspruch 1, dadurch **gekennzeichnet**, daß das Drucksteuerventil (19) als Druckbegrenzungsventil ausgebildet ist, und daß zwischen dem Rückschlagventil (20) und dem hauptzylinderseitigen Abschnitt (5) an der Leitung (10) eine mit dem Drucksteuerventil (19) verbundene Steuerleitung (21) angeschlossen ist.

4. Bremsanlage nach Anspruch 3, dadurch **gekennzeichnet**, daß das Drucksteuerventil (19) einen als Stufenkolben (41) ausgebildeten Steuerkolben aufweist, dessen Stufenfläche mit Atmosphärendruck und dessen Stirnflächen mit dem Ausgangsdruck beaufschlagt sind.

5. Bremsanlage nach Anspruch 1, dadurch **gekennzeichnet**, daß die Saugseite der Pumpe (13) durch ein Trennventil (29) von dem Hauptzylinder (1), dem in die Bremsleitung geschalteten Rückschlagventil (12) und dem Drucksteuerventil (19) trennbar ist, daß die Druckmittelzufuhr zum Bremszylinder (6, 7) durch ein erstes Steuerventil (23) in der Bremsleitung sperrbar und der Bremszylinder (6, 7) durch ein zweites Steuerventil (25) mit einer zu einem Niederdruckspeicher (27) und zur Saugseite der Pumpe (13) führenden Rücklaufleitung (26) verbindbar ist und daß das Trennventil (29) und die Steuerventile (23, 25) durch eine Bremsschlupfregeleinrichtung steuerbar sind.

6. Bremsanlage nach Anspruch 5, dadurch **gekennzeichnet**, daß der Hauptzylinder (1) mit einer Vorrichtung zur Vorladung der Bremsanlage verbunden ist und daß in Reihe mit dem Drucksteuerventil (19) ein Sperrventil (30) mit parallelem Druckbegrenzungsventil (32) vorgesehen ist, wobei die Vorrichtung zur Vorladung, das Sperrventil (39), das Trennventil (29) und die Steuerventile (23, 25) durch eine Regeleinrichtung zur Fahrstabilitäts-und/oder Antriebsschlupfregelung steuerbar sind.

7. Bremsanlage nach Anspruch 6, dadurch **gekennzeichnet**, daß die Vorrichtung zur Vorladung der Bremsanlage eine von einem Elektromotor antreibbare Ladepumpe ist, die an einem Behälteranschluß (37) des Hauptzylinders (1) angeschlossen ist, wobei die Verbindung vom Behälteranschluß (37) zum Behälter (2) durch ein Ventil (34) sperrbar ist.

8. Bremsanlage nach Anspruch 7, dadurch **gekennzeichnet**, daß die Ladepumpe aus einem Ladezylinder (33) besteht, dessen Kolben (54) durch einen elektromechanischen Antrieb bewegbar ist.

9. Bremsanlage nach Anspruch 6, dadurch **gekennzeichnet**, daß die Vorrichtung zur Vorladung der Bremsanlage ein am Hauptzylinder (1,67) angeordneter elektromechanischer Antrieb ist, durch den der Kolben (71) des Hauptzylinders (1,67) bewegbar ist.

10. Bremsanlage nach einem der Ansprüche 8 oder 9, dadurch **gekennzeichnet**, daß der elektromechanische Antrieb eine Rutschkupplung (63) aufweist.

11. Bremsanlage nach einem der Ansprüche 8 bis 10, dadurch **gekennzeichnet**, daß der elektromechanische Antrieb einen Elektromotor (76) und ein Getriebe (75) aufweist, das die Drehbewegung des Elektromotors (76) in eine geradlinige Bewegung umformt.

## Claims

1. Hydraulic brake system with a master cylinder (1) that can be actuated by a brake pedal (3), a brake line (4) connecting the master cylinder (1) to a brake cylinder (6, 7), and a hydraulic unit for boosting the brake force with a pump (13) adapted to be driven by a motor (18), the delivery flow of the pump being supplied to the suction side of the pump (13) by way of a pressure control valve (19) within a circuit, wherein the pump (13) and the pressure control valve (19) are arranged parallel to one another in the brake line (4), wherein the suction side of the pump (13) and the outlet of the pressure control valve (19) are connected to the master cylinder (1) and the pressure side of the pump (13) and the inlet of the pressure control valve (19) are connected to the brake cylinder (6, 7), and wherein the pressure control valve (19) controls the pump pressure in dependence on the section (5) of the brake line (4) that is connected to the master cylinder (1) and the hydraulically effective surfaces of the pressure control valve (19) are designed in such a way that the ratio between pump pressure and master cylinder pressure is greater than 1, **characterized in that**
- a non-return valve (12) closing in the direction of the master cylinder (1) is arranged parallel to the pump (13) and to the pressure control valve (19) in brake line (4);
- a non-return valve (20) that closes in the direction of the pressure control valve (19) is arranged at the outlet side of the pressure control valve (19) which extends in the direction of a line (10) connected to the section (5) on the side of the master cylinder; and
- the pump (13) is connected to the brake cylinder (6, 7) by way of a restrictor (17).

2. Brake system as claimed in claim 1, characterized in that the pump (13) is driven by an electric motor (18) which is switched on as soon as a braking operation is initiated.

3. Brake system as claimed in claim 1, characterized in that the pressure control valve (19) is designed as a pressure limiting valve, and in that the control line (21) which is connected to the pressure control valve (19) is arranged between the non-return valve (20) and the section (5) of line (10) that is on the side of the master cylinder.

4. Brake system as claimed in claim 3, characterized in that the pressure control valve (19) includes a control piston designed as a stepped piston (41), with atmospheric pressure being applied to its stepped surface and discharge pressure being applied to its end faces.

5. Brake system as claimed in claim 1, characterized in that the suction side of the pump (13) can be disconnected from the master cylinder (1) by a separating valve (29), from the non-return valve (12) arranged in the brake line and from the pressure control valve (19), in that the supply of pressure fluid to the brake cylinder (6, 7) can be blocked by a first control valve (23) arranged in the brake line and the brake cylinder (6, 7) can be connected to a return line (26) leading to a low-pressure accumulator (27) and to the suction side of the pump (13) by means of a second control valve (25), and in that the separating valve (29) and the control valves (23, 25) can be controlled by a brake slip control unit.

6. Brake system as claimed in claim 5, **characterized in that** the master cylinder (1) is connected to a unit for precharging the brake system, and in that a shut-off valve (30) with a parallel pressure limiting valve (32) is arranged in line with the pressure control valve (19), wherein the precharging unit, the shut-off valve (30), the separating valve (29) and the control valves (23, 25) can be controlled by a driving stability and/or traction slip control system.

7. Brake system as claimed in claim 6, **characterized in that** the unit for precharging the brake system is a charge pump adapted to be driven by an electric motor, which is connected to the reservoir attachment (37) of the master cylinder (1), wherein the port between the reservoir attachment (37) and the reservoir (2) can be blocked by a valve (34).

8. Brake system as claimed in claim 7, **characterized in that** the charge pump consists of a charge cylinder (33), whose piston (54) can be displaced by an electromechanical drive.

9. Brake system as claimed in claim 6, **characterized in that** the unit for precharging the brake system is an electromechanical drive that is provided on the master cylinder (1, 67), with said drive displacing the piston (71) of the master cylinder (1, 67).

10. Brake system as claimed in any one of claims 8 or 9,
**characterized in that** the electromechanical drive has a sliding clutch (63).

11. Brake system as claimed in any one of claims 8 to 10,
**characterized in that** the electromechanical drive has an electric motor (76) and a gearing (75) which transforms the rotational motion of the electric motor (76) into a straight-line motion.

## Revendications

1. Système de freinage hydraulique, comportant un maître-cylindre (1) pouvant être actionné par une pédale de frein (3), une conduite de frein (4) reliant le maître-cylindre (1) à un cylindre de frein (6, 7), et un dispositif hydraulique pour amplifier la force de freinage, avec une pompe (13), qui peut être entraînée par un moteur (18) et dont le flux refoulé est dirigé en circuit, en passant par une soupape de commande de pression (19), vers le côté d'aspiration de la pompe (13), la pompe (13) et la soupape de commande de pression (19) étant montées en parallèle dans la conduite de frein (4), le côté d'aspiration de la pompe (13) et la sortie de la soupape de commande de pression (19) étant reliés au maître-cylindre (1), et le côté de refoulement de la pompe (13) et l'entrée de la soupape de commande de pression (19) étant reliés au cylindre de frein (6, 7), et la soupape de commande de pression (19) commandant la pression de la pompe en fonction de la pression dans la partie (5) de la conduite de frein (4) qui est reliée au maître-cylindre (1), et les surfaces hydrauliquement actives de la soupape de commande de pression (19) étant conçues de telle sorte que le rapport de la pression de la pompe à la pression du maître-cylindre est supérieur à 1, **caractérisé**
- en ce qu'une soupape de non retour (12) se fermant en direction du maître-cylindre (1) est montée parallèlement à la pompe (13) et à la soupape de commande de pression (19) dans la conduite de frein (4),
- en ce que la soupape de commande de pression (19) présente du côté de sortie, en direction d'une conduite (10) raccordée à la partie (5) située du côté du maître-cylindre, une soupape de non retour (20) se fermant en direction de la soupape de commande de pression (19),
- et en ce que la pompe (13) est raccordée au cylindre de frein (6, 7) en passant par un étranglement (17).

2. Système de freinage selon la revendication 1, **caractérisé** en ce que la pompe (13) est entraînée par un moteur électrique (18) qui est mis en marche lors de l'introduction d'un processus de freinage.

3. Système de freinage selon la revendication 1, **caractérisé** en ce que la soupape de commande de pression (19) est réalisée sous forme de soupape de limitation de pression, et en ce qu'une conduite de commande (21) reliée à la soupape de commande de pression (19) est raccordée à la conduite (10) entre la soupape de non retour (20) et la partie (5) située du côté du maître-cylindre.

4. Système de freinage selon la revendication 3, **caractérisé** en ce que la soupape de commande de pression (19) comporte un piston de commande réalisé sous forme de piston à gradin (41), dont la face de gradin est sollicitée par la pression atmosphérique et les faces frontales par la pression de sortie.

5. Système de freinage selon la revendication 1, **caractérisé** en ce que le côté d'aspiration de la pompe (13) peut être isolé, par une soupape d'isolement (29), du maître-cylindre (1), de la soupape de non retour (12) montée dans la conduite de frein et de la soupape de commande de pression (19), en ce que l'apport de fluide sous pression au cylindre de frein (6, 7) peut être interdit par une première soupape de commande (23) dans la conduite de frein et le cylindre de frein (6, 7) peut être, par une deuxième soupape de commande (25), relié à une conduite de retour (26) menant à un accumulateur à basse pression (27) et au côté d'aspiration de la pompe (13), et en ce que la soupape d'isolement (29) et les soupapes de commande (23, 25) peuvent être commandées par un dispositif de régulation du glissement de freinage.

6. Système de freinage selon la revendication 5, **caractérisé** en ce que le maître-cylindre (1) est relié à un dispositif pour précharger le système de freinage, et en ce qu'une soupape d'arrêt (30) avec une soupape de limitation de pression (32) en parallèle est prévue en série avec la soupape de commande de pression (19), le dispositif de précharge, la soupape d'arrêt (30), la soupape d'isolement (29) et les soupapes de commande (23, 25) pouvant être commandés par un dispositif de régulation de la stabilité de conduite et/ou par un système antipatinage.

7. Système de freinage selon la revendication 6, **caractérisé** en ce que le dispositif pour précharger le système de freinage est une pompe de charge, qui peut être entraînée par un moteur électrique et qui est raccordée à un branchement de réservoir (37) du maître-cylindre (1), la liaison du branchement de réservoir (37) vers le réservoir (2) pouvant être interdite par une soupape (34).

8. Système de freinage selon la revendication 7, **caractérisé** en ce que la pompe de charge est constituée d'un cylindre de charge (33) dont le piston (54) peut être déplacé par un entraînement électromécanique.

9. Système de freinage selon la revendication 6, **caractérisé** en ce que le dispositif pour précharger le système de freinage est un entraînement électromécanique, qui est disposé sur le maître-cylindre (1,67) et qui permet de déplacer le piston (71) du maître-cylindre (1,67).

10. Système de freinage selon la revendication 8 ou 9, **caractérisé** en ce que l'entraînement électromécanique comporte un accouplement à friction (63).

11. Système de freinage selon l'une quelconque des revendications 8 à 10, **caractérisé** en ce que l'entraînement électromécanique comporte un moteur électrique (76) et un mécanisme de transmission (75), qui transforme le mouvement de rotation du moteur électrique (76) en un mouvement rectiligne.
